**Europäisches Patentamt**

**European Patent Office**

**Office européen des brevets**

(19)

(11) Veröffentlichungsnummer: **0 228 504**

**A2**

(12) # EUROPÄISCHE PATENTANMELDUNG

(21) Anmeldenummer: **86111472.6**

(22) Anmeldetag: **19.08.86**

(51) Int. Cl.⁴: **H02B 13/02** , H02G 5/06

(30) Priorität: **10.12.85 DD 284052**

(43) Veröffentlichungstag der Anmeldung:
**15.07.87 Patentblatt 87/29**

(84) Benannte Vertragsstaaten:
**AT CH DE FR LI NL SE**

(71) Anmelder: **VEB "Otto Buchwitz"**
**Starkstrom-Anlagenbau Dresden**
**Industriegelände Postschliessfach 360**
**DDR-8060 Dresden(DD)**

(72) Erfinder: **Böhme, Klaus, Dr.-Ing.**
**Bodenbacher Strasse 135 a**
**DDR-8045 Dresden(DD)**
Erfinder: **Digmayer, Michael, Dr.-Ing.**
**Ernst-Thälmann-Strasse 10**
**DDR-8255 Nossen(DD)**
Erfinder: **Selbt, Günter**
**Ho-Chi-Minh-Strasse 14**
**DDR-8010 Dresden(DD)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **Dreipolige Stromleiteranordnung mit Abzweigstellen.**

(57) Die Erfindung geht von einer dreipoligen Stromleiteranordnung aus, wo die Stromleiter mit ihren Achsen die Eckpunkte eines Dreieckes bilden. Die Stromleiter sind Abschnittsweise zusammengesetzt; die Anordnung soll die Anbringung von Abzweigungen ermöglichen. Sie soll raumsparend ausgebildet sein, da sie vorwiegend für metallgekapselte Anlagen mit Luft-oder Gasisolierung bestimmt ist. Gemäß der Erfindung sind die Leiterabschnitte an ihren Enden gebogen oder gekröpft und so orientiert, daß sich die Verbindungsstellen im Inneren des von den Leitern gebildeten Dreieckes befinden. Die den Abzweig bildenden Leiter sind so orientiert, das sie jeweils eine gedachte Verbindungslinie zwischen den Leitern schneiden. Die Verbindungspunkte können im Schnittpunkt der Mittelsenkrechten des Dreieckes liegen. Als vorteilhaft ist eine Ausführung beschrieben, wo die Verbindungspunkte auf der gedachten Verbindungslinie zwischen Schnittpunkt der Mittelsenkrechten und Achse des betroffenen Leiterabschnittes liegen.

Fig 2

## Dreipolige Stromleiteranordnung mit Abzweigstellen

Die Erfindung betrifft eine dreipolige Stromleiteranordnung mit Abzweigstellen, deren Leiter außerhalb der Abzweigstellen mit ihren Achsen die Eckpunkte eines Dreieckes, bevorzugt eines gleichseitigen Dreieckes bilden. Die Stromleiteranordnung ist aus mehreren Leiterabschnitten zusammengesetzt und verbunden, wobei diese Verbindungsstellen mindestens teilweise Abzweigstellen sind.

Dreipolige Stromleiteranordnungen für verschiedene Zwecke, z. B. in metallgekapselten Schaltanlagen sind in vielfältigen Ausführungen bekannt. Elemente derartiger Anordnungen sind die drei Pole der Sammel-oder Hilfsschienen, die Abgangsschienen, Verbindungen zwischen je einem Pol der Sammel-oder Hilfsschienen und einer Abgangsschiene, Befestigungspunkte zum Tragen der Stromleiteranordnung sowie gegebenenfalls die Metallkapselung, z. B. in Form von Schaltschränken.

So sind luftisolierte Schaltanlagen, also solche unter Atmosphärendruck, bekannt, in denen - scharfkantige Flachleiter als Sammel-oder Hilfsschienen nebeneinander oder im Dreieck angeordnet sind und die Abgangsschienen aus Flachleitern aufweisen, mit denen gerade Sammel-oder Hilfsschienen T-förmig verbunden sind. Diese Anordnungen sind aber entladungsphysikalisch dem stark inhomogenen elektrischen Feld zuzuordnen. Für den, die Schaltanlagen gefährdenten Durchschlag der atmosphärischen Luft ist es aber maßgebend, wieweit stabile Teilentladungen vorwachsen können. Das zwingt zu relativ großen Isolierabständen und ist für eine kleinräumige Bauweise ungeeignet. Bekannt ist bei luftisolierten Schaltanlagen unter Atmosphärendruck weiterhin anstelle der Flachleiter als Sammelschienen Rund-oder Rohrleiter einzusetzen und diese vorzugsweise im Dreieck anzuordnen. Hier gibt es Ausführungen, bei denen diese Rund-oder Rohrleiter geradlinig verlaufen und mit Flachleitern als Abgangsschienen T-förmig verbunden sind. Die Verbindungen mit den Abgangsschienen befinden sich mithin in den Eckpunkten des von den drei Polen der Sammelschienen gebildeten Dreieckes. Das stark inhomogene elektrische Feld der Flachleiter und deren Schraubverbindung mit den Sammelschienen, ist dabei ebenfalls ungünstig, weil dadurch große Isolierabstände notwendig sind; das durch die Anwendung der Rund-oder Rohrleiter bedingte schwach inhomogene Feld, das zu Anordnungen ohne stabile Teilentladungen und damit zu geringen Isolierabständen führen würde, wird dabei aber nicht genutzt. Zwar gibt es Lösungen, diese Abgangsschienen mit festem Isolierstoff zu umhüllen und die Verbindungen mit Isolierstoffbarrieren zu umgeben (DE-PS 21 46 769). Das erfordert jedoch den zusätzlichen Einsatz fester Isolierstoffe sowie die Beherrschung der fertigungstechnischen Voraussetzungen für die Herstellung der Isolierstoffumhüllung von Stromleitern.

Bekannt ist weiterhin, daß die Rund-oder Rohrleiter bügelförmig ausgebildet und die Bügelenden an einem außerhalb des durch die drei Pole der Sammelschienen gebildeten Dreiecks befindlichen Befestigungspunkt -z. B. an einem Stützer -mit der jeweiligen Abgangsschiene verbunden sind - (Prospekt der Firma Raychem "BBIT Schrumpfschlauch zur Isolation von Sammelschienen bis 17,3/30 kV").

Diese Lösung ermöglicht auf Grund des schwach inhomogenen elektrischen Feldes zwar geringere Isolierabstände zwischen den geraden Teilen der bügelförmigen Sammelschienenabschnitte; an den Verschraubungen der Befestigungspunkte, die teilweise an den Befestigungspunkten noch - scharfkantige Flachleiterstücke aufweisen, tritt aber wiederum ein stark inhomogenes elektrisches Feld auf, so daß eine konsequente kleinräumige Anordnung ebenfalls nicht vorliegt. Dagegen sind bei gasisolierten Schaltanlagen dreipolige Stromleiteranordnungen bekannt, die konsequent das schwach inhomogene elektrische Feld nutzen und so zu kleinräumiger Bauweise führen. Die Leiter sind dabei im Dreieck angeordnet. Die Verbindungen für die Abzweigstellen sind T-förmig gestaltet und befinden sich in den Eckpunkten des durch die drei Leiter des Sammelschienensystemes gebildeten Dreieckes und sind in geeigneter Weise abgeschirmt. Von Nachteil ist hier, daß nur in einer Richtung die Möglichkeit besteht, bei durchgehenden Leitern Abzweige zwischen zwei Polen der Stromleiteranordnung herauszuführen. Hieraus folgt , daß eine dreipolige Stromleiteranordnung für kleinräumige Bauweise gesucht wird, die insbesondere für metallgekapselte Schaltanlagen mit Luftisolierung unter Atmosphärendruck oder mit Gasisolierung einsetzbar ist.

Der Erfindung liegt die Aufgabe zugrunde, eine dreipolige Stromleiteranordnung mit Abzweigstellen und mit einer Leiteranordnung, die annähernd mit ihren Achsen die Eckpunkte eines Dreieckes bilden und die aus Leiterabschnitten zusammengesetzt und verbunden sind, wobei die Verbindungsstellen mindestens teilweise Abzweigstellen sind, so weiterzubilden, daß eine sowohl kleinräumige Bauweise unter Ausnutzung der physikalischen Effekte des schwach inhomogenen Feldes ermöglicht wird, als auch Abgangsschienen in alle Richtungen vorgesehen werden können.

Diese Aufgabe wird ausgehend von der Anwendung der im Oberbegriff des Patentanspruches definierten Merkmale erfindungsgemäß durch die Anwendung der Lehre des Kennzeichens des Patentanspruches gelöst; in den abhängigen Ansprüchen sind Weiterbildungen des Erfindungskonzeptes beschrieben.

Derartige Stromleiteranordnungen sind vor allem für metallgekapselte und luftisolierte bzw. gasisolierte Anlagen geeignet. Unter gasisolierten Anlagen sind dabei solche mit Isoliergasen anders als Luft oder abweichend von atmosphärischem Druck zu verstehen.

Ausführungsbeispiel

Anhand von Zeichnungen werden zwei Ausführungsbeispiele für die in den Patentansprüchen definierte Erfindung beschrieben. Es zeigen:

Fig. 1: eine dreipolige Stromleiteranordnung mit Verbindungsstellen im Schnittpunkt der Mittelsenkrechten, in Seitenansicht und im Schnitt,

Fig. 2: eine dreipolige Stromleiteranordnung wie in Fig. 1 in dreidimensionaler Darstellung,

Fig. 3: eine dreipolige Stromleiteranordnung mit Verbindungsstellen, die jeweils zwischen der Leiterachse und dem Schnittpunkt der Mittelsenkrechten liegen, in Seitenansicht und im Schnitt,

Fig. 4: eine dreipolige Stromleiteranordnung wie in Fig. 3 in Draufsicht und im Schnitt.

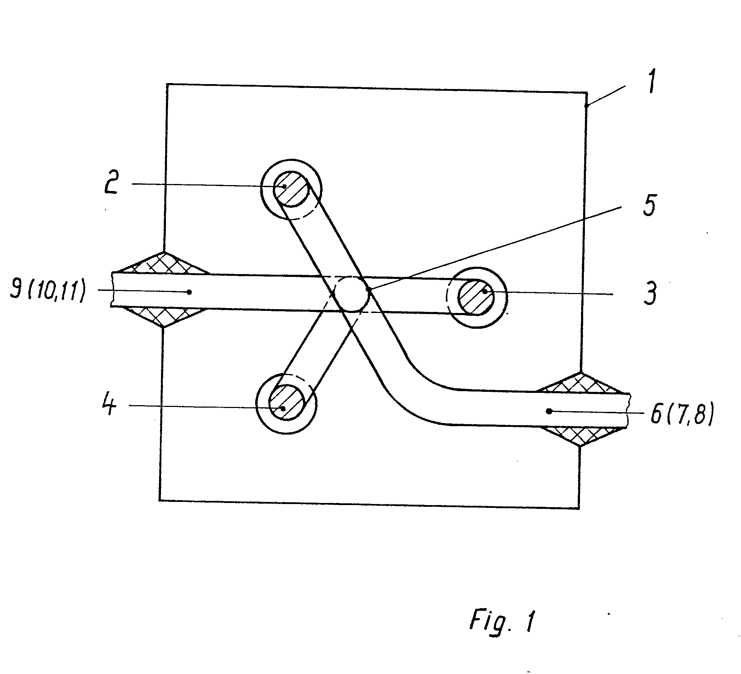

In Fig. 1 ist eine im Querschnitt viereckige Metallkapselung 1 einer luftisolierten Schaltanlage unter Atmosphärendruck gezeigt.

Diese Metallkapselung nimmt drei Leiter 2, 3 und 4 einer dreipoligen Stromleiteranordnung auf, deren Achsen die Eckpunkte eines gleichseitigen Dreieckes bilden. Die Stromleiter 2, 3 und 4 haben einen kreisrunden Querschnitt. Die Stromleiteranordnung besteht aus Leiterabschnitten, deren Enden gebogen sind. Das Ende des Stromleiterabschnittes im Bereich der Verbindungspunkte 5 ist so gestaltet, daß es an seinem Ende den Anschluß des nächsten Stromleiterabschnittes gestattet und sogleich auch den Anschlußpunkt für eine Abzweigstelle bildet. Die Abweichung des Endes des Stromleiterabschnittes, das den Verbindungspunkt 5 bildet, von der Achse des Stromleiters 2, 3 oder 4 in seinem geraden Abschnitt ist dabei so gewählt, daß der Verbindungspunkt 5 im Schnittpunkt der Mittelsenkrechten der gedachten Verbindungslinien zwischen den drei Leitern 2, 3 und 4 liegt. Die Abzweigungen 6, 7, 8 sind genauso wie die Abzweigungen 9, 10 und 11 in Richtung der Achsen der Leiter versetzt angeordnet, so daß in der Schnittdarstellung nur eine einzige Ableitung darstellbar ist.

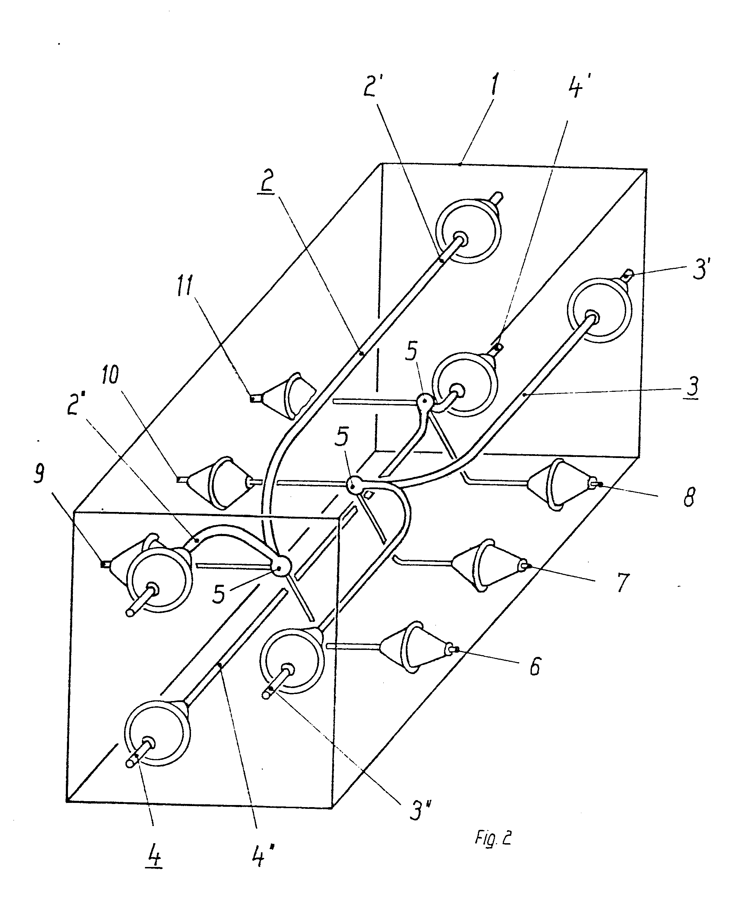

In Fig. 2 sind die Leiter 2, 3 und 4 ebenfalls in einer Metallkapselung 1 eingebaut.

Hier ist erkennbar, wie die einzelnen Leiter der dreipoligen Leiteranordnung 2, 3 und 4 aus jeweils zwei Leiterabschnitten, nämlich den Abschnitten 2' und 2"; 3' und 3" sowie 4' und 4" zusammengefügt sind. An den Verbindungspunkten 5 greifen jeweils zwei Abzweigungen an, und zwar am Verbindungspunkt des Leiterabschnittes 2' mit dem Leiterabschnitt 2" die Abzweigung 6 und 9, am Verbindungspunkt 5 des Leiterabschnittes 3' und 3" die Abzweigungen 7 und 10 sowie am Verbindungspunkt 5 der Leiterabschnitte 4' und 4" die Abzweigungen 8 und 11.

Im Ausführungsbeispiel sind die Abzweigungen so geführt, daß sie entweder die gedachte Verbindungslinie zwischen dem Leiter 3 und 4 als Seitenhalbierende im rechten Winkel schneiden oder indem sie dies bei der gedachten Verbindungslinie zwischen dem Leiter 2 und 4 tun. Es ist leicht ersichtlich, daß noch Raum zwischen dem Leiter 2 und 3 für die Herausführung von Abzweigungen zur Verfügung steht, sofern ein drittes System von Abzweigungen benötigt wird.

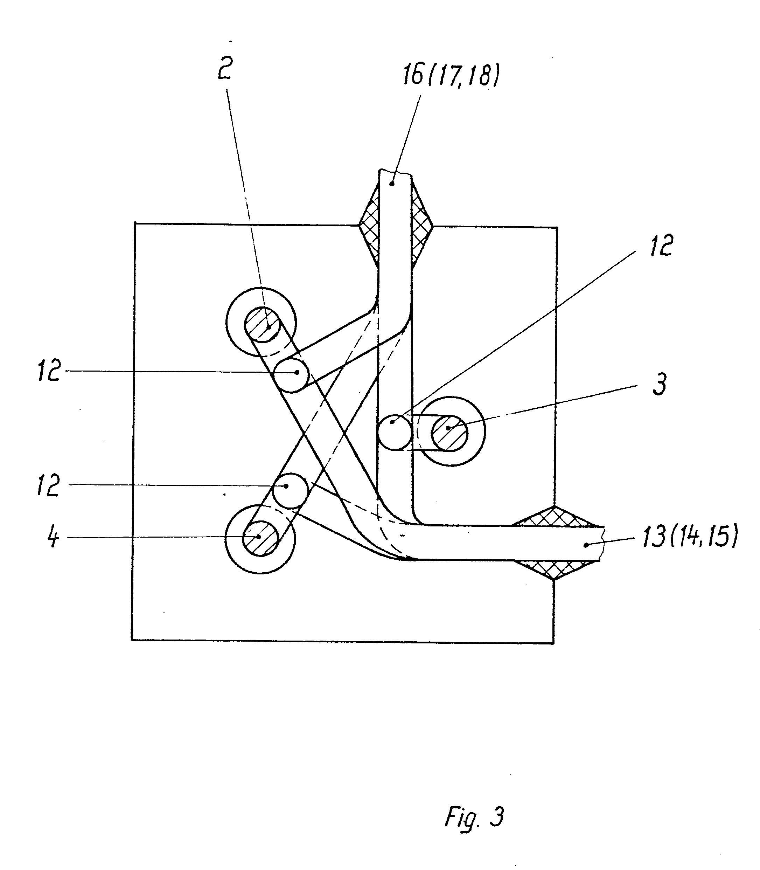

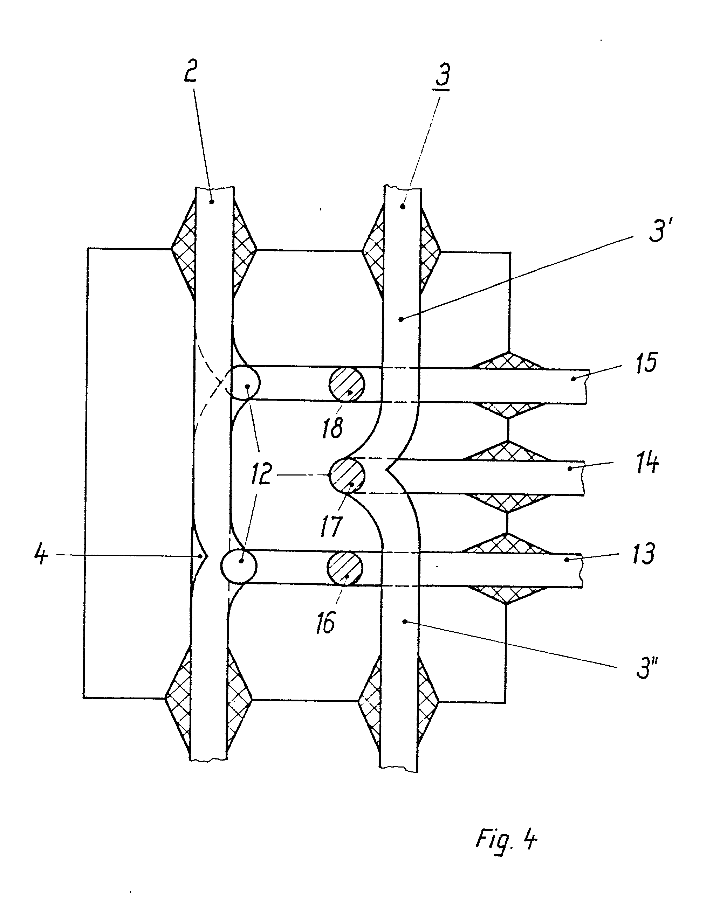

In den Figuren 3 und 4 sind wieder die Leiter einer dreipoligen Stromleiteranordnung mit 2, 3 und 4 bezeichnet. Hier liegen Verbindungspunkte 12 für Leiterabschnitte, z. B. 3' und 3" bzw. für den Anschluß von Abzweigungen zwischen dem Schnittpunkt der Mittelsenkrechten und der Achse der Leiter im ungekrümmten Bereich. Die Abzweigungen 13 und 18 schneiden hier gedachte Verbindungslinien zwischen den Leiterachsen als Seitenhalbierende rechtwinklig, während die Abzweigungen 14, 15, 16, 17 diese Verbindungslinien außermittig und nicht rechtwinklig schneiden. Diese Anordnung hat hochspannungstechnisch den Vorzug vor der Anordnung gemäß Fig. 1 und 2, weil die, die Homogenität des elektrischen Feldes störenden Bauteile, z. B. die Verbindungselemente der Leiter an den Verbindungspunkten 12 von den Systemteilen mit anderem Potential einen größeren Abstand annehmen und gleichzeitig vom Feld des eigenen Leiters entlastet werden.

Auch diese Anordnung ist, wie die Anordnung nach Fig. 1 und 2, für die Herausführung eines dritten Systems leicht modifizierbar.

Die Ausführungsbeispiele sind auf die Anordnung der Stromleiter auf den Ecken eines gleichseitigen Dreieckes beschränkt. Natürlich ist die Erfindung auch bei anderen Konfigurationen anwendbar. So kann es vorteilhaft sein, die Leiter auf den Ecken eines gleichschenkligen Dreieckes vorzusehen und die Länge des dritten Schenkels grösser zu bemessen, als die beiden gleichlangen Schenkel. Im Bereich dieses Schenkels können dann solche Systemteile als Abzweigungen verwandt werden, die auf Grund ihrer Gestalt eine größere Inhomogenität des Feldes bewirken.

Aufstellung der verwendeten Bezugszahlen

1 Metallkapselung

2 Leiter einer dreipoligen Stromleiteranordnung

3 Leiter einer dreipoligen Stromleiteranordnung

4 Leiter einer dreipoligen Stromleiteranordnung

5 Verbindungspunkt; Verbindungsstelle

6 Abzweigung einer ersten Richtung in der Anordnung nach Fig. 1 und 2

7 Abzweigung einer ersten Richtung in der Anordnung nach Fig. 1 und 2

8 Abzweigung einer ersten Richtung in der Anordnung nach Fig. 1 und 2

9 Abzweigung einer zweiten Richtung in der Anordnung nach Fig. 1 und 2

10 Abzweigung einer zweiten Richtung in der Anordnung nach Fig. 1 und 2

11 Abzweigung einer zweiten Richtung in der Anordnung nach Fig. 1 und 2

12 Verbindungspunkt; Verbindungsstelle

13 Abzweigung einer ersten Richtung in der Anordnung nach Fig. 3 und 4

14 Abzweigung einer ersten Richtung in der Anordnung nach Fig. 3 und 4

15 Abzweigung einer ersten Richtung in der Anordnung nach Fig. 3 und 4

16 Abzweigung einer zweiten Richtung in der Anordnung nach Fig. 3 und 4

17 Abzweigung einer zweiten Richtung in der Anordnung nach Fig. 3 und 4

18 Abzweigung einer zweiten Richtung in der Anordnung nach Fig. 3 und 4

## Ansprüche

1. Dreipolige Stromleiteranordnung mit Abzweigstellen (5, 12), deren Leiter (2, 3 und 4) außerhalb der Abzweigstellen mit ihren Achsen die Eckpunkte eines Dreieckes, bevorzugt eines gleichseitigen Dreieckes, bilden, aus mehreren Leiterabschnitten (2', 2"; 3', 3"; 4', 4") zusammengesetzt und verbinden sind, wobei diese Verbindungsstellen (5, 12) mindestens teilweise Abzweigstellen sind, dadurch gekennzeichnet, daß die Leiterabschnitte (2', 2 "; 3', 3 "; 4', 4 ") an ihren Enden gebogen oder gekröpft und so orientiert sind, daß sich die Verbindungsstellen im Inneren des von den Achsen der Leiter gebildeten Dreieckes befinden, die Abzweigstellen (5, 12) in Längsrichtung der Leiter versetzt angeordnet und die jeweils einen Abzweig bildenden Leiter (6, 7, 8; 9, 10, 11; 13, 14, 15; 16, 17, 18) so orientiert sind, daß sie eine gedachte Verbindungslinie zwischen zwei Leitern schneiden. - (Fig. 1 -4)

2. Dreipolige Stromleiteranordnung nach Anspruch 1, dadurch gekennzeichnet, daß die Stromleiter (2, 3, 4) Rundleiter oder Rohrleiter sind. (Fig. 1 -4)

3. Dreipolige Stromleiteranordnung nach Anspruch 1 und 2, dadurch gekennzeichnet, daß die den Abzweig (6, 7, 8; 9, 10, 11; 13, 14, 15; 16, 17, 18) bildenden Leiter Rundleiter oder Rohrleiter sind. (Fig. 1 -4)

4. Dreipolige Stromleiteranordnung nach Anspruch 1 -3, dadurch gekennzeichnet, daß die Leiterabschnitte an ihren Enden so gekröpft und/oder gebogen und so orientiert sind, daß die Verbindungsstellen (5) jeweils im Schnittpunkt der Mittelsenkrechten liegen und die jeweils den Abzweig bildenden Leiter (6 -11) so orien tiert sind, daß sie nahezu eine gedachte Verbindungslinie zwischen zwei Leitern halbieren. (Fig. 1 und 2)

5. Dreipolige Stromleiteranordnung nach Anspruch 1 -3, dadurch gekennzeichnet, daß die Enden der Leiterabschnitte so gekröpft oder gebogen sind, daß die Verbindungsstellen (12) jeweils zwischen leiterachse ausserhalb des Abzweiges und dem Schnittpunkt der Mittelsenkrechten liegen. - (Fig. 3 und 4)

6. Dreipolige Stromleiteranordnung nach Anspruch 1 -5, dadurch gekennzeichnet, daß die einen ersten Abzweig bildenden drei Leiter (6, 7, 8 bzw. 13, 14, 15) eine andere gedachte Verbindungslinie schneiden als die einen zweiten und gegebenenfalls dritten Abzweig bildenden drei Leiter (9, 10, 11 bzw. 16, 17, 18).

Fig. 1

Fig. 2

Fig. 3

0 228 504

Fig. 4